**Europäisches Patentamt**

**European Patent Office**

**Office européen des brevets**

(11) Veröffentlichungsnummer : **0 131 703**
**B1**

(19)

(12)                    **EUROPÄISCHE PATENTSCHRIFT**

(45) Veröffentlichungstag der Patentschrift :
30.09.87

(51) Int. Cl.⁴ : **H 04 N   3/18, H 02 M   3/335**

(21) Anmeldenummer : 84105196.4

(22) Anmeldetag : 08.05.84

(54) Schaltnetzteil für ein Gerät mit Bereitschaftsbetrieb, insbesondere für einen Fernsehempfänger.

(30) Priorität : 01.06.83 DE 3319785

(43) Veröffentlichungstag der Anmeldung :
23.01.85 Patentblatt 85/04

(45) Bekanntmachung des Hinweises auf die Patenterteilung : 30.09.87 Patentblatt 87/40

(84) Benannte Vertragsstaaten :
AT BE FR GB IT NL SE

(56) Entgegenhaltungen :
EP-A- 0 097 884
ELEKTRONIK, 5/1981, München; Egon F. NEPF:
"Schaltungsprinzipien und Auswahlkriterien von
Gleichstromversorgungen" Seiten 113-116
FUNK-TECHNIK, 11/1972, München, Heidelberg;
D.HÖHNE: "Thyristornetzteile für 110'-Farbfernseh-
empfänger" Seiten 411-413

(73) Patentinhaber : TELEFUNKEN Fernseh und Rundfunk
GmbH
Göttinger Chaussee 76
D-3000 Hannover 91 (DE)

(72) Erfinder : von der Ohe, Wilfried
Holtenser Weg 35
D-3257 Springe 5 (DE)

(74) Vertreter : Einsel, Robert, Dipl.-Ing.
TELEFUNKEN Fernseh und Rundfunk GmbH Göttinger Chaussee 76
D-3000 Hannover 91 (DE)

## Beschreibung

In der EP-A-0 097 884, veröffentlicht am 11.01.1984, ist ein Schaltnetzteil für ein Gerät mit Bereitschaftsbetrieb, insbesondere für einen Fernsehempfänger beschrieben, welches nach Artikel 54 (3) EPÜ den Stand der Technik bildet. Dieses Schaltnetzteil weist einen ersten Gleichrichter zur Erzeugung einer ersten, hohen Betriebsspannung und einen zweiten Gleichrichter zur Erzeuung einer zweiten, niedrigen, auch im Bereitschaftsbetrieb wirksamen Betriebsspannung auf. Es arbeitet im Bereitschaftsbetrieb ohne Verwendung eines Relais auch bei niedrigen Netzspannungen einwandfrei und nimmt im Bereitschaftsbetrieb nur eine geringe Leistung auf.

Weiterhin zeichnet sich dieses Schaltnetzteil durch folgende Merkmale aus :

a) Bei Bereitschaftsbetrieb ist eine sekundärseitig auftretende Spannung über ein vom Trenntransformator getrenntes galvanisches Trennelement derart in die primärseitige Schaltung eingekoppelt, daß die erste Spannung auf einen verringerten Wert abfällt, bei dem die angeschlossenen Stufen nicht mehr arbeiten.

b) Die erste Betriebsspannung ist mit ihrem verringerten Wert als zweite Betriebsspannung ausgenutzt.

Zur Realisierung des Merkmals b) wird bei Bereitschaftsbetrieb die erste Betriebsspannung mit einem aus Transistoren bestehenden Schalter auf den Weg der zweiten Betriebsspannung geschaltet, so daß die erste Betriebsspannung mit ihrem geringeren Wert als zweite Betriebsspannung für die im Bereitschaftsbetrieb wirksamen Stufen wirksam wird. Der elektronische Schalter benötigt für die Durchschaltung eine bestimmte Leistung, so daß Wärme abgeführt werden muß und evtl. Kühlbleche für die den Schalter bildenden Transistoren notwendig sind. Diese Leistungsabgabe ist deshalb besonders nachteilig, weil der Bereitschaftsbetrieb überwiegend, d. h. etwa 80-90 % der Gesamtzeit vorliegt.

Nach einem Artikel von Egon F. Nepf in der Zeitschrift « Elektronik » 5/1981 aus dem Franzis-Verlag, München, auf Seiten 113 bis 116 ist es bekannt, für die Durchschaltung von höheren Leistungen in regelbaren Labornetzteilen eine Thyristorregelung einzusetzen.

Der vorliegenden Erfindung liegt die Aufgabe zugrunde, die Leistungsaufnahme und den Kostenaufwand für den benötigten elektronischen Schalter zu verringern.

Diese Aufgabe wird durch die im Anspruch 1 beschriebene Erfindung gelöst. Vorteilhafte Weiterbildungen der Erfindung sind in den Unteransprüchen beschrieben.

Der Thyristor hat gegenüber einem Schalter mit Transistoren den Vorteil, daß er nur zwei Zustände hat. Er ist entweder völlig gesperrt oder völlig durchgeschaltet und nimmt somit in beiden Zuständen praktisch keine Leistung auf. Ein Thyristor ist außerdem billiger als ein entsprechender Transistor. Der Thyristor wirkt in vorteilhafter Weise als gesteuerter Gleichrichter, der bei Normalbetrieb gesperrt ist und bei Bereitschaftsbetrieb die Wechselspannung am Eingang des ersten Gleichrichters gleichrichtet und gleichzeitig auf den Weg der zweiten Betriebsspannung schaltet.

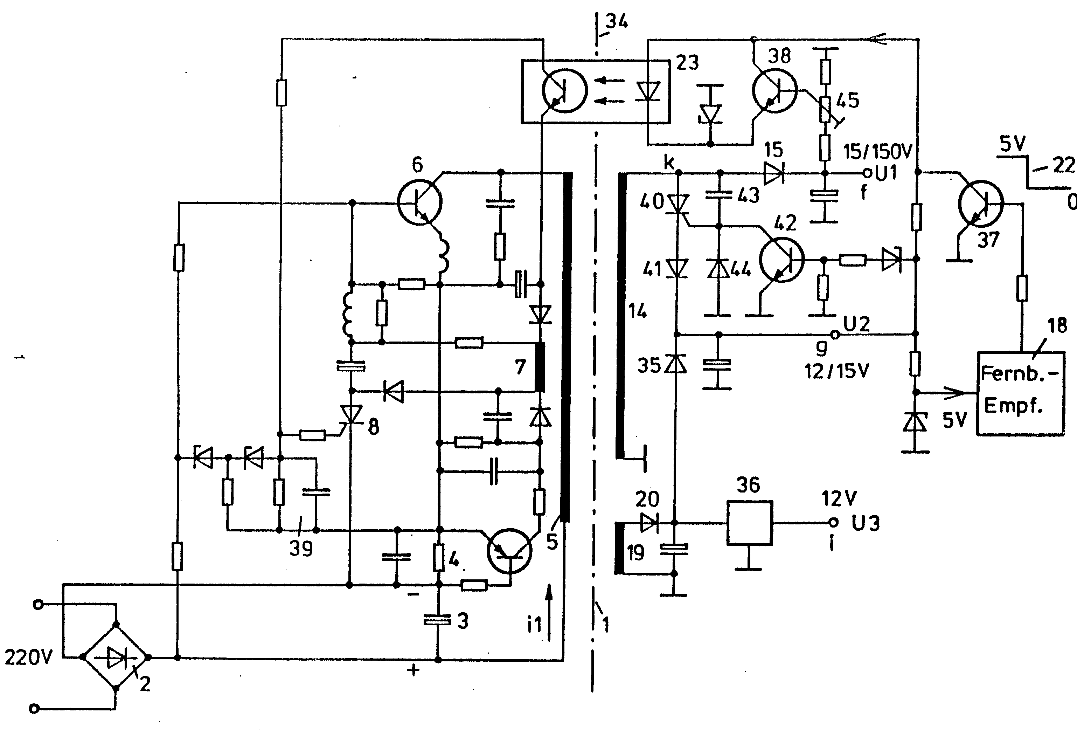

Ein Ausführungsbeispiel der Erfindung wird anhand der Zeichnung erläutert.

Das Schaltnetzteil gemäß der Zeichnung enthält auf der Primärseite des Trenntransformators 1 den Netzgleichrichter 2, den Ladekondensator 3, den Strom-Meßwiderstand 4, die Arbeitswicklung 5, den Schalttransistor 6, die zur Schwingungserzeugung dienende Rückkopplungswicklung 7 und den zur Steuerung des Schalttransistors 6 dienenden Thyristor 8. Die Sekundärwicklung 14 liefert über den Gleichrichter 15 an der Klemme f eine erste Betriebsspannung U1. Eine zweite Sekundärwicklung 19 liefert über den Gleichrichter 20 und die Diode 35 an der Klemme g eine Betriebsspannung U2 für den Fernbedienungsempfänger 18. Außerdem wird über den Spannungsstabilisator 36 an der Klemme i eine weitere Betriebsspannung U3 erzeugt. Die strichpunktierte Linie 34 deutet die galvanische Trennstelle zwischen Netz- und Empfängerschaltung an. Die Spannungen U1, U2 haben bei Bereitschaftsbetrieb den angegebenen niedrigen und bei Normalbetrieb den angegebenen hohen Wert. Im folgenden wird die Wirkungsweise nacheinander für Bereitschaftsbetrieb und Normalbetrieb beschrieben.

Bereitschaftsbetrieb

Der Fernbedienungsempfänger 18 liefert die Stellgröße 22 mit dem Wert + 5V. Der Transistor 37 ist durchlässig, der Transistor 38 ist gesperrt, der Optokoppler 23 erhält keine Spannung. Dadurch wird die Spannung an dem RC-Glied 39 auf die Primärseite so gering und der Strom i1 bei einem so geringen Wert abgeschaltet, daß das Schaltnetzteil nur die für Bereitschaftsbetrieb notwendige Leistung überträgt. Die Spannung U1 hat einen Wert von 15 V, bei dem die angeschlossenen Stufen nicht mehr arbeiten. Die Spannung U2 an der Klemme g würde auch so weit abfallen, daß der Fernbedienungsempfänger 18 nicht mehr arbeitet. Dieser muß jedoch bei Bereitschaftsbetrieb weiter mit Betriebsspannung versorgt werden. Zu diesem Zweck ist der Wechselspannungseingang k des Gleichrichters 15 über die Reihenschaltung des Thyristors 40 und der Diode 41 mit der Klemme g verbunden. Durch den leitenden Transistor 37 ist der Transistor 42 gesperrt. Die Wechselspannung am Eingang k gelangt über den Kondensator 43 auf die Steuerelektrode des Thyristors 40 und steuert diesen periodisch mit positiven Halbwellen leitend. Die Diode 44 verhindert das Auftreten negativer Spannungsimpulse an der Steuerelektrode. Der Thyristor 40 wirkt als Gleichrichter und erzeugt an der Klemme g aus der Wechselspannung am Punkt k eine Betriebsspannung von U2 = 12 V, die für den Fernbedienungsempfänger 18 ausreichend ist.

## Normalbetrieb

Der Fernbedienungsempfänger 18 liefert eine Stellgröße 22 mit dem Wert 0. Der Transistor 37 ist gesperrt. Die Spannung U2 gelangt jetzt als Betriebsspannung an den Transistor 38, so daß der Optokoppler 23 mit Strom gespeist wird. Dadurch wird die Spannung an dem RC-Glied 39 und damit der Endwert des periodischen Stromes i1 so erhöht, daß das Schaltnetzteil die für Normalbetrieb notwendige Leistung überträgt und die dargestellten Spannungen die angegebenen hohen Werte annehmen. An den Transistor 38 gelangt außerdem von dem Potentiometer 45 eine Regelspannung. Diese steuert zusätzlich die Spannung am RC-Glied 39 im Sinne einer Stabilisierung der Ausgangsspannungen U1, U2, U3. Die Spannung U2 gelangt außerdem an die Basis des Transistors 42, so daß dieser leitend wird und die Steuerelektrode des Thyristors 40 erdet. Der Thyristor 40 kann jetzt nicht mehr von den Impulsen über den Kondensator 43 leitend gesteuert werden und bleibt gesperrt. Die Punkte k und g sind dadurch voneinander entkoppelt. An der Klemme f steht jetzt eine Spannung von U1 = 150 V und an der Klemme g eine Spannung U2 = 15 V. Die Diode 41 dient zur Entkopplung, um die Spannung U2 von dem Thyristor 40 fernzuhalten.

## Patentansprüche

1. Schaltnetzteil für ein Gerät mit Bereitschaftsbetrieb, insbesondere für einen Fernsehempfänger, mit einem ersten Gleichrichter (15) zur Erzeugung einer ersten, hohen Betriebsspannung (U1) und einem zweiten Gleichrichter (20) zur Erzeugung einer zweiten, niedrigen, der Aufrechterhaltung des Bereitschaftsbetriebes dienenden Betriebsspannung (U2), wobei die erste Betriebsspannung (U1) bei Bereitschaftsbetrieb auf einen niedrigen Wert (15V) umgeschaltet und über einen elektronischen Schalter an den Weg (g) der zweiten Betriebsspannung (U2) angelegt ist und der elektronische Schalter durch einen zwischen dem Wechselspannungseingang (k) des ersten Gleichrichters (15) und dem Weg (g) der zweiten Betriebsspannung (U2) liegenden, als gesteuerter Gleichrichter arbeitenden Thyristor (40) gebildet ist.

2. Netzteil nach Anspruch 1, dadurch gekennzeichnet, daß an die Steuerelektrode des Thyristors (40) eine die Umschaltung bewirkende Stellgröße (22) und die Wechselspannung vom Eingang (k) des ersten Gleichrichters (15) angelegt sind.

3. Netzteil nach Anspruch 2, dadurch gekennzeichnet, daß die Steuerelektrode über einen Kondensator (43) mit dem Eingang (k) des ersten Gleichrichters (15) und über eine Diode (44) mit Masse verbunden ist.

## Claims

1. Switching circuit for an apparatus having a readiness condition, especially for a television receiver, in which there is a first rectifier (15) for generating a first high operational voltage (U1) and a second rectifier (20) for generating a second low operational voltage (U2) which serves to maintain the readiness condition, whereby the first operational voltage (U1) is switched in the readiness condition occurring to a low value (15V) and is applied by way of an electronic switch to the path of the second operational voltage (U2) and the electronic switch is formed as a thyristor (40) acting as a controlled rectifier, and disposed between the alternating voltage input (k) of the first rectifier and the path of the second operational voltage (U2).

2. Circuit according to Claim 1, characterized in that a control magnitude (22) which affects the switching, and the alternating voltage from the input (k) of the first rectifier (15) are applied to the control electrode of the thyristor (40).

3. Circuit according to Claim 2, characterized in that the control electrode is connected by a condenser (43) to the input (k) of the first rectifier (15) and by a diode (44) to chassis.

## Revendications

1. Module d'alimentation destiné à un dispositif à fonctionnement instantané, en particulier pour un poste de télévision, équipé d'un premier redresseur (15) produisant une première tension de service élevée (U1), et d'un deuxième redresseur (20) pour la production d'une deuxième tension de service basse (U2) servant à maintenir le service instantané ; la première tension de service (U1) étant, en service instantané, commutée à une valeur basse (15V) et raccordée par un commutateur électronique sur la voie (g) de la deuxième tension de service (U2), et le commutateur électronique étant formé par un thyristor (40) fonctionnant en tant que redresseur commandé et situé à l'entrée de tension alternative (k) du premier redresseur (15) et la voie (g) de la deuxième tension de service (U2).

2. Module d'alimentation selon revendication 1, caractérisé par le fait qu'un appareil de réglage (22) produisant une commutation, et une tension alternative à partir de l'entrée (k) du premier redresseur (15), sont raccordés à la gâchette de commande du thyristor (40).

3. Module d'alimentation selon revendication 2, caractérisé par le fait que la gâchette de commande est reliée à la masse par un condensateur (43) à l'entrée (k) du premier redresseur (15) ainsi que par une diode (44).

0 131 703